# FASCICULE DE BREVET EUROPEEN

(11) **EP 2 550 776 B1**
(45) Date de publication et mention de la délivrance du brevet: **29.04.2020**
(21) Numéro de dépôt: 11714355.2
(22) Date de dépôt: 15.03.2011
(51) Int. Cl.: H04L 12/28, H04L 29/06

(54) **PROCEDE DE GESTION DES ENREGISTREMENTS DANS UN RESEAU IMS ET SERVEUR S-CSCF METTANT EN OEUVRE CE PROCEDE**
VERFAHREN ZUR VERWALTUNG VON DATENSÄTZEN IN EINEM IMS-NETZWERK UND DIESES VERFAHREN UMSETZENDER S-CSCF-SERVER
METHOD FOR MANAGING RECORDS IN AN IMS NETWORK, AND S-CSCF SERVER IMPLEMENTING SAID METHOD

(30) Priorité: 23.03.2010 FR 1052060
(43) Date de publication de la demande: 30.01.2013
(73) Titulaire: Orange, 75015 Paris (FR)
(72) Inventeur: BOUVET, Bertrand, F-22700 Perros Guirec (FR)
(86) Numéro de dépôt international: PCT/FR2011/050523
(87) Numéro de publication internationale: WO 2011/117510

(56) Documents cités:
- WO-A1-2009/052870
- WO-A1-2009/054661
- WO-A1-2009/155987
- WO-A1-2010/006643
- US-A1- 2009 191 873

## Description

### Arrière-plan de l'invention

L'invention se situe dans le domaine des réseaux de télécommunication de type IMS (IP Multimedia Subsystem) tel que défini par le 3GPP (Third Generation Partnership Project).

L'un des objectifs de l'IMS est de permettre à un utilisateur d'accéder à différents services quelque soit son type de connectivité IP.

Les réseaux IMS, initialement conçus pour les réseaux mobiles, tendent à se développer en priorité sur des réseaux d'accès fixes de type ADSL (Asymmetric Digital Subscriber Line), ou FTTH (« Fiber To The Home »), ou réseaux câblés notamment.

Les architectures IMS pour les réseaux fixes ont en particulier été déployées pour la commercialisation d'offres dites « Multiplay » permettant à un utilisateur d'accéder à différents services du réseau IMS, et notamment à des services d'accès au réseau Internet, de voix sur IP (VoIP) et de télévision sur internet (IPTV) via une passerelle domestique.

Afin de diversifier leur offre, les opérateurs de télécommunication proposent maintenant des terminaux complémentaires au téléphone fixe, ces terminaux complémentaires étant équipés d'un logiciel de voix sur IP (VoIP) utilisant au moins le même identifiant public IMPU que celui de la passerelle domestique et un identifiant privé IMPI pouvant ou non être le même que celui de la passerelle domestique.

On rappelle à ce propos que pour s'enregistrer en cœur de réseau IMS, un terminal envoie, à ce serveur S-CSCF (Serving Call State Control Function) responsable de la gestion des enregistrements, une requête d'enregistrement comportant notamment les deux identifiants précités.

L'IMPI (IP Multimedia Private Identity) est un identifiant permettant d'identifier un terminal, cet identifiant étant également utilisé pour l'authentification de ce terminal au cœur du réseau IMS, cette authentification nécessitant aussi un autre paramètre connu de l'homme du métier sous le nom « SIP Password ».

L'IMPU (IP Multimedia Public Identity) est l'identifiant publique associé au terminal, par exemple un numéro de téléphone.

On notera que ces identifiants IMPI, IMPU et le paramètre SIP Password précités peuvent être mémorisés dans un fichier de configuration téléchargé par la passerelle domestique au moment de son démarrage.

En pratique, dans l'état actuel de la technique, un terminal SIP après s'être attaché à une passerelle domestique, obtient une adresse IP auprès d'un serveur DHCP intégré dans cette passerelle, sollicite un serveur spécialisé pour télécharger son fichier de configuration VoIP comportant les identifiants IMPI, IMPU, et password SIP précités puis le nom de domaine du réseau IMS pour demander son enregistrement en cœur de réseau IMS.

De façon connue, après l'obtention d'une adresse IP auprès du réseau, par exemple via un serveur DHCP, la pile logicielle VoIP de la passerelle domestique s'enregistre initialement au cœur du réseau IMS puis se réenregistre de manière subséquente avec une période définie par un paramètre EXPIRES typiquement de l'ordre de une heure.

Chacun de ces enregistrements successifs consiste à fournir au cœur de réseau IMS outre les informations liées à l'authentification, un couple d'informations constitué par :
- un paramètre AoR (Adress of Record) correspondant à l'identité publique IMPU représentatif de l'adresse logique à laquelle ledit terminal peut être joint ; et
- un paramètre AoC (Adress of Contact) correspondant à l'adresse IP et au numéro de port de ce terminal représentatif de l'adresse physique à laquelle ledit terminal peut être joint.

Plusieurs terminaux disposant de la même identité publique IMPU (passerelle domestique, terminaux fixes ou mobiles de voix sur IP, ...) pouvant demander à s'enregistrer auprès du serveur S-CSCF, les constructeurs d'entité S-CSCF ont mis en place des moyens pour contrôler le nombre d'enregistrement SIP pour une même identité IMPU.

Ce contrôle peut notamment consister à :
- prévoir un nombre maximum de terminaux pouvant s'enregistrer avec la même identité publique IMPU ; et à
- mettre en œuvre une politique à appliquer en cas de réception de plusieurs demandes d'enregistrement SIP portant la même identité publique IMPU.

Une politique connue consiste notamment à limiter le nombre de terminaux enregistrables en cœur de réseau avec la même identité publique IMPU et à dés-enregistrer, pour permettre l'enregistrement d'un nouveau terminal, le terminal le plus ancien enregistré selon un mécanisme FIFO (First In First Out).

Les terminaux complémentaires précités peuvent notamment être des terminaux mobiles connectés à la passerelle domestique par une liaison sans fil de type Wifi.

Du fait de leur mobilité, la gestion de l'enregistrement de ces terminaux dans le réseau IMS pose un problème particulier. En effet, si un terminal mobile quitte la zone Wifi et réentre dans celle-ci, il ne va pas se desenregistrer automatiquement en quittant la zone Wifi mais lorsqu'il va y réentrer, il va s'enregistrer à nouveau au cœur du réseau avec potentiellement une nouvelle adresse de contact, ces enregistrements successifs étant susceptibles d'entrainer le rejet de la passerelle domestique et celui d'autres terminaux déjà enregistrés, par application de la politique de type FIFO mentionnée ci-dessus.

Afin d'éviter ce problème, une solution consiste à vérifier, auprès du serveur spécialisé mentionné ci-dessus, si le nombre maximum de terminaux portant la même identité publique IMPU a déjà été enregistré au sein du réseau IMS, et à refuser l'enregistrement du terminal complémentaire si c'est déjà le cas en ne lui délivrant pas ses paramètres de configuration VoIP (IMPU, IMPI, password notamment).

Pour obtenir cette information, le serveur spécialisé doit interroger le SLF (Service Location Function) dans le cas d'un réseau IMS de grande ampleur pour retrouver sur quelle HSS l'IMPU est hébergé, puis le HSS (Home Subscriber Service) pour savoir sur quel serveur S-CSCF est enregistré la passerelle et/ou au moins un terminal SIP portant l'identité publique IMPU, puis une fois l'identification du S-CSCF obtenue, le serveur spécialisé utilise une méthode définie dans la spécification IETF SIP RFC3261 qui consiste à envoyer vers le S-CSCF une requête SIP REGISTER ayant pour paramètres l'identité publique IMPU et une adresse de contact ="*". La réponse générée par le S-CSCF 200 OK fournit une liste pouvant contenir de 0 à n adresse(s) de contact et pour chacune d'entre elle la valeur de la durée d'enregistrement restante.

Cette solution n'est pas satisfaisante car elle complexifie les traitements du serveur spécialisé, génère de la charge complémentaire au niveau du SLF, HSS et du S-CSCF, et nécessite l'ouverture de flux physiques au niveau des pare-feux entre les serveurs précités ce qui affaiblit globalement le niveau de sécurité. De plus, cette méthode génère de l'indisponibilité de service VoIP pour les terminaux VoIP, typiquement lorsqu'un terminal n'arrive pas à se désenregistrer en cœur de réseau sur perte de connectivité IP (perte de WiFi), ou lorsque le terminal doit être redémarré. Dans ce cas, le nombre maximal d'enregistrements configuré étant déjà atteint, les paramètres de configuration VoIP ne sont pas délivrés au terminal et ce, pendant la durée maximale égale à la valeur du champ Expires configurée de manière globale au niveau du S-CSCF. De même, cette indisponibilité de service peut être générée par la passerelle elle-même, les passerelles connues à ce jour n'ayant pas la possibilité de se désenregistrer après redémarrage (en anglais « reboot »).

Une solution reliée à l'usage de files d'enregistrement indépendantes pour achever un contrôle parental dans le domaine IMS est connue du document WO2010/006643 A1.

### Objet et résumé de l'invention

Plus précisément, l'invention concerne un procédé de gestion des enregistrements dans un réseau IMS selon la revendication 1, ce procédé comportant :
- une étape de création, pour une identité publique donnée, d'au moins deux files d'enregistrements, chacune étant associée à une politique d'enregistrement ;
- une étape de réception d'un message d'enregistrement émis par un terminal ayant ladite identité publique ;
- une étape d'attribution d'une desdites files d'enregistrement audit terminal sur la base d'un paramètre discriminant compris dans ledit message.

Corrélativement, l'invention concerne aussi un serveur S-CSCF selon la revendication 6 comportant :
- des moyens de création, pour une identité publique donnée, d'au moins une file d'enregistrement associée à une politique d'enregistrement ;
- des moyens de réception d'un message d'enregistrement émis par un terminal ayant ladite identité publique ;
- des moyens d'attribution d'une desdites files d'enregistrement audit terminal sur la base d'un paramètre discriminant compris dans ledit message.

Le procédé de gestion des enregistrements selon l'invention et le serveur S-CSCF ne présentent pas les inconvénients de ceux de l'art antérieur.

L'invention propose en effet fort avantageusement de gérer plusieurs files d'enregistrement de façon indépendante, chacune de ces files étant associée à une politique d'enregistrement.

Bien entendu, deux files d'enregistrement peuvent être associées à la même politique.

Dans un mode particulier de réalisation de l'invention, l'une des files d'enregistrement précitées est une file de type FIFO comportant au plus un enregistrement, cette file étant réservée à un terminal de type passerelle domestique.

On réserve ainsi une file d'enregistrement pour la passerelle domestique.

Cette caractéristique permet avantageusement d'éviter le rejet de la passerelle domestique par les enregistrements successifs de terminaux accédant au réseau IMS avec la même identité publique IMPU, la gestion des enregistrements de ces terminaux étant effectuée en utilisant une autre file.

Une file d'enregistrement peut en particulier regrouper des terminaux de même nature c'est-à-dire des terminaux générant des événements ou effets de bord similaires.

L'opérateur pourra choisir de regrouper dans une même file, les terminaux auxquels il souhaite offrir une même qualité de service QoS.

Par exemple, une file à un seul enregistrement pourra être réservée pour chacun des terminaux exigeant une disponibilité maximum, par exemple pour les passerelles domestiques. En isolant ainsi ces terminaux, l'opérateur s'assure que ceux-ci ne pourront être éjectés en cas d'enregistrements successifs de terminaux non prioritaires ayant la même identité IMPU. Par exemple d'autres files pourront être prévues pour :
- les terminaux VoIP mobiles connectés en WiFi; et
- les terminaux de type PC munis de logiciels de voix sur IP (Softphone VoIP).

Dans une mise en œuvre particulière de l'invention, on peut ainsi utiliser une file d'enregistrement réservée à des terminaux mobiles d'un constructeur particulier.

Selon un mode particulier de réalisation de l'invention, le paramètre discriminant permettant la sélection de la file d'enregistrement peut être le paramètre q défini dans le document RFC3261 de l'IETF.

En variante, ce paramètre discriminant peut aussi être un entête comportant des informations sur le type du terminal émetteur du message d'enregistrement. Il peut s'agir par exemple d'un entête SIP, le champ SIP User Agent défini dans le document RFC3261 de l'IETF, le champ Call-Id qui pourrait être formaté de manière spécifique par type de terminal, ou tout autre champ SIP existant ou à créer au niveau normalisation ou une adresse de contact de ce terminal permettant d'identifier le type de terminal par rapport à son adresse de réseau obtenue via application du masque de réseau IP. Ainsi, par exemple, toutes les tranches d'adresses IP publiques attribuées par un fournisseur de service VoIP à chacune des passerelles résidentielles offrant un service VoIP peuvent s'enregistrer dans une file d'enregistrement dédiée aux passerelles alors que toutes les autres adresses IP utilisées pour former l'adresse de contact, par exemple celles d'un hot spot d'un autre fournisseur de service, utiliseront une autre file d'enregistrement.

Dans un mode particulier de réalisation de l'invention, une politique d'enregistrement associée à une file d'enregistrement donnée peut être choisie parmi :
- une première politique pour laquelle il n'est pas effectué de contrôle quant au nombre d'enregistrements pouvant être enregistrés dans ladite file ;
- une deuxième politique définissant un nombre limite d'enregistrements dans la file d'enregistrement, celle-ci étant gérée selon une méthode de type FIFO ;
- une troisième politique consistant à rejeter toute demande d'enregistrement dans ladite file, au-delà d'un nombre limite d'enregistrements dans ladite file ;
- une quatrième politique consistant à rejeter le terminal de ladite file générant le moins de trafic sur le réseau ;
- une cinquième politique consistant à rejeter le terminal de ladite file dont le paramètre q défini dans le document RFC3261 de l'IETF est le plus petit.

Dans un mode particulier de réalisation, au moins une des files d'enregistrement est configurée pour fournir, via le champ EXPIRES une durée d'enregistrement propre à cette file.

Par exemple, la file d'enregistrement dédiée à la passerelle domestique pourra fournir une valeur EXPIRES égale à 3600 secondes dans le code retour 200 OK du message REGISTER alors que pour les files d'enregistrement des terminaux SIP connectés derrière cette passerelle, la valeur EXPIRES pourra être égale à 120 secondes. En effet, pour que la passerelle domestique active sa fonction NAT/PAT (Network Adress Translation/Port Adress Translation) pour ces terminaux SIP, il est nécessaire de générer du trafic régulièrement pour maintenir les tables NAT/PAT de correspondance au sein de la passerelle.

Dans un mode particulier de réalisation, le procédé de gestion selon l'invention comporte une étape de téléchargement, par le serveur S-CSCF, auprès d'un serveur HSS, d'un fichier de configuration de la ou des files d'enregistrement utilisables par une identité publique IMPU, ce fichier de configuration comportant, pour chacune de ces files :
- la taille de la file d'enregistrement;
- la politique d'enregistrement associée à cette file ;
- le paramètre discriminant permettant d'attribuer la file d'enregistrement à un terminal particulier et
- une valeur de la durée d'enregistrement propre à cette file.

Cette solution permet de personnaliser la configuration des différentes files d'enregistrement à chacun des clients, et donc en fonction du contenu de leur souscription au service VoIP et à ses différentes options.

Selon cet aspect, l'invention concerne aussi un serveur HSS selon la revendication 9 comportant un fichier de configuration du ou des terminaux utilisables avec une identité publique IMPU dans un réseau IMS, ledit fichier de configuration comportant, pour au moins une file d'enregistrement associée à cette identité publique :
- un nombre de file par IMPU
- la taille de ladite file d'enregistrement ;
- un paramètre discriminant permettant d'attribuer la file à un terminal;
- une politique d'enregistrement associée à cette file ; et
- une valeur de durée d'enregistrement propre à cette file.

Dans un mode particulier de l'invention, il est possible de prévoir une file dite par défaut où peuvent venir s'enregistrer des terminaux ne disposant pas du paramètre discriminant, cette file étant configurée en terme de nombre d'enregistrement, de politique d'enregistrement, et de valeur EXPIRES.

Selon un autre aspect, l'invention concerne aussi un message d'enregistrement d'un terminal dans un réseau IMS, ce message comportant un paramètre discriminant constituant un critère de sélection, pour un serveur S-CSCF de ce réseau IMS, d'une file d'enregistrement parmi une pluralité de files d'enregistrement associées à une identité publique du terminal émetteur dudit message.

Dans un mode particulier de réalisation, les différentes étapes du procédé de gestion d'enregistrements sont déterminées par des instructions de programmes d'ordinateurs.

En conséquence, l'invention vise aussi un programme d'ordinateur selon la revendication 7 sur un support d'informations, ce programme étant susceptible d'être mis en œuvre par un serveur S-CSCF ou plus généralement par un ordinateur, ce programme comportant des instructions adaptées à la mise en oeuvre des étapes du procédé de gestion d'enregistrements tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur selon la revendication 8, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins et à l'annexe qui en illustrent un exemple de réalisation dépourvu de tout caractère limitatif. Sur les figures :
- la figure 1 représente, dans son environnement, un serveur S-CSCF conforme à l'invention dans un mode particulier de réalisation ;
- la figure 2 représente, sous forme d'organigramme, les principales étapes d'un procédé de gestion des enregistrements conforme à un mode particulier de réalisation de l'invention ; et
- la figure 3 représente un message d'enregistrement conforme à un mode particulier de réalisation de l'invention.

### Description détaillée de l'invention

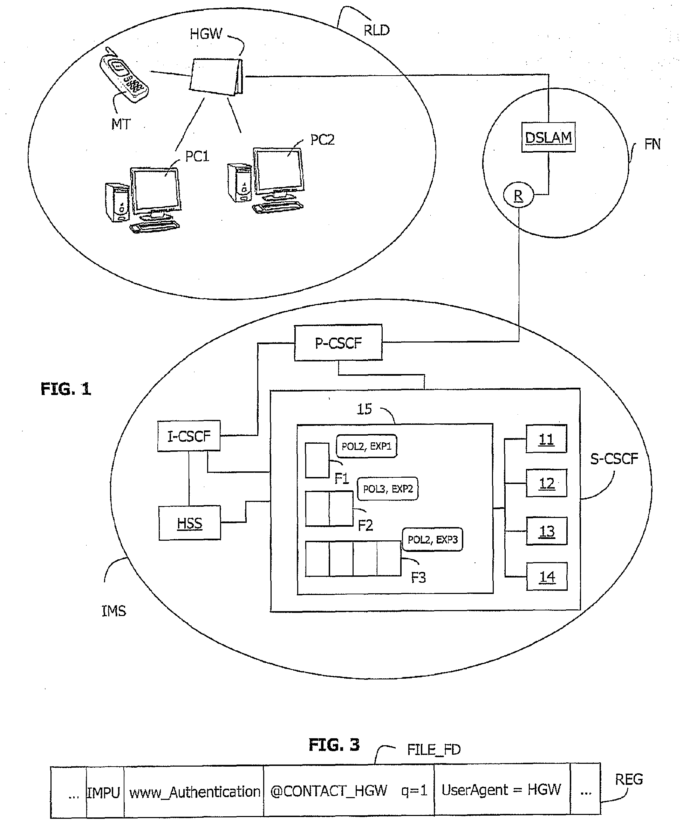

La **figure 1** représente un serveur S-CSCF conforme à l'invention dans son environnement.

Sur cette figure, on a représenté une passerelle domestique HGW réalisant l'interface entre un réseau fixe FN et un réseau local domestique RLD.

Un terminal mobile MT et deux ordinateurs PC1, PC2 sont connectés à la passerelle domestique HGW, ces trois terminaux ayant le même identifiant public IMPU (IP Multimédia Public Identity).

De façon connue, cette passerelle HGW permet aux terminaux MT, PC1 et PC2 d'établir une session avec des entités du réseau IMS (IP Multimédia Subsystem) en utilisant le protocole SIP (Session Initiation Protocol).

Dans l'exemple de réalisation décrit ici, une telle session traverse notamment les équipements suivants :
- un dispositif DSLAM, équipement connu du réseau fixe FN ayant pour fonction principale de récupérer le flux de données transitant sur les lignes téléphoniques auxquelles il est raccordé et de multiplexer ces données pour les diriger vers le réseau IMS ;
- un certain nombre de routeurs R du réseau fixe ; et
- dans le réseau IMS, des entités SIP du type P-CSCF Proxy-SIP et S-CSCF, serveur SIP en charge notamment de la signalisation et du contrôle de session, et I-CSCF (en anglais « Interrogating Call Session Control Function »).

De façon connue, le réseau IMS comporte également une entité HSS (Home Subscriber Server) qui mémorise le profil de service attaché au compte IMS du client puis éventuellement dans un mode de réalisation de l'invention le profils des files d'enregistrement permettant à la passerelle HGW et aux terminaux MT, PC1, PC2 autorisés à s'enregistrer.

Par conséquent, dans un mode particulier de réalisation, le procédé de gestion selon l'invention permet une étape de téléchargement, par ledit serveur S-CSCF, auprès d'un serveur HSS, d'un fichier de configuration d'au moins une file d'enregistrement associée à l'identité publique IMPU, ce fichier de configuration comportant, pour chacune desdites files d'enregistrement :
- une taille de cette file d'enregistrement;
- une politique d'enregistrement associée à cette file ;
- le paramètre discriminant permettant d'attribuer cette file d'enregistrement à un terminal et
- une valeur de durée d'enregistrement propre à cette file.

Dans le mode de réalisation décrit ici, l'architecture matérielle du serveur S-CSCF est celle d'un ordinateur conventionnel.

Il comporte notamment un processeur 11, une mémoire vive 12 de type RAM, une mémoire morte 13 de type ROM et des moyens 14 de communication sur le réseau IMS connus de l'homme du métier.

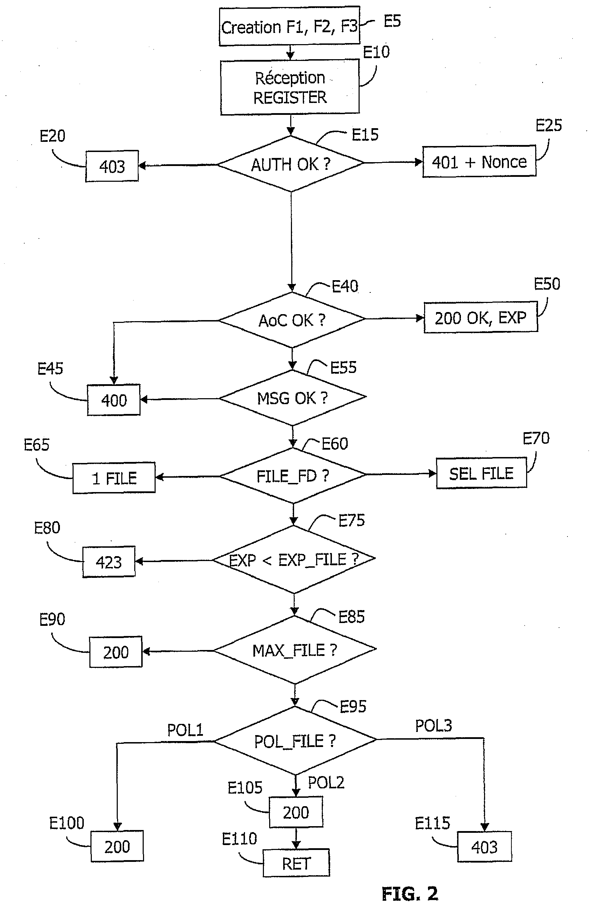

La mémoire morte 13 de type ROM constitue un support d'enregistrement conforme à l'invention sur lequel est enregistré un programme d'ordinateur conforme à l'invention et dont les principales étapes sont représentées sous forme d'organigramme à la figure 2.

La mémoire vive 12 de type RAM permet l'exécution de ce programme d'ordinateur par le processeur 11.

Conformément à l'invention, le serveur S-CSCF gère plusieurs files F1, F2, F3 d'enregistrement pour l'identité publique IMPU des terminaux MT, PC1, PC2.

Dans un mode particulier de réalisation de l'invention, le paramétrage des files d'attente F1, F2, F3 est mémorisé dans une mémoire non-volatile réinscriptible 15 du serveur S-CSCF, par exemple un disque dur.

Dans le mode de réalisation décrit ici, le paramétrage des files F1, F2, F3 est dans le HSS et téléchargé dans la mémoire vive 12 du serveur S-CSCF lors de la première demande d'enregistrement d'un terminal ayant l'identité publique IMPU.

Dans l'exemple de réalisation décrit ici, la file d'enregistrement F1 est réservée à la passerelle domestique HGW ; elle comporte au plus un enregistrement, et fonctionne selon une politique POL2 de type FIFO (« First In First Out », premier entré, premier sorti).

La deuxième file d'enregistrement F2 est associée aux ordinateurs PC1, PC2 de voix sur IP (« VoIP », Voice over IP) ; elle comporte au plus deux enregistrements et met en œuvre une politique POL3 de blocage.

La troisième file d'enregistrement F3 est associée aux terminaux mobiles de voix sur IP (Mobile VoIP) ; elle comporte au plus quatre enregistrements et met aussi en œuvre la politique POL2 de type FIFO.

Dans le mode de réalisation décrit ici, le serveur S-CSCF crée ces files d'enregistrement F1, F2, F3 de façon statique au niveau de sa mémoire RAM 12.

Conformément à l'invention, le serveur S-CSCF est apte, sur réception d'un message d'enregistrement SIP REGISTER émis par la passerelle HGW ou un terminal MT, PC1, PC2 à sélectionner la file d'enregistrement F1, F2, F3 associée à ce terminal et à mettre en œuvre, pour ce terminal, la politique d'enregistrement associée à cette file.

En référence à la **figure 2** nous allons maintenant décrire les principales étapes E5 à E115 d'un procédé d'enregistrement conforme à l'invention.

Ce procédé peut être mis en œuvre par le serveur S-CSCF de la figure 1.

Ce procédé comporte dans cet exemple, une première étape E5 de création de files d'enregistrement F1, F2, F3.

Nous supposerons maintenant que le serveur S-CSCF reçoit, au cours d'une étape E10, un message d'enregistrement conforme à l'invention, ce message étant émis par un terminal MT, PC1, PC2 du réseau local domestique RLD, ou bien depuis la passerelle HGW étant rappelé que tous ces terminaux ont la même identité publique IMPU.

A titre d'exemple, un message d'enregistrement conforme à l'invention est donné à la **figure 3****.**

En plus des champs classiques d'un message SIP REGISTER (IMPU, Authentification,...) ce message comporte, conformément à l'invention, un champ FILE_FD qui contient un paramètre discriminant permettant au serveur S-CSCF de sélectionner une file d'enregistrement F1, F2, F3 pour le terminal émetteur de ce message.

Ce paramètre discriminant peut par exemple être constitué par :
- le paramètre « q » définit par le document RFC3261 de la norme IETF, ce paramètre connu de l'homme du métier prenant une valeur réelle comprise entre 0 et 1 afin de donner la priorité au terminal pour la fonction de « Forking » lorsqu'un appel entrant à destination de l'IMPU est présenté au serveur S-CSCF ; on rappelle que le mécanisme de « Forking » permet de faire sonner tous les terminaux enregistrés en cœur IMS portant la même identité publique IMPU de manière parallèle ou séquentielle en fonction de cette priorité « q » ;
- l'entête SIP (Header SIP User Agent) ayant pour fonction de fournir des informations sur le type du terminal émetteur de la requête (nom du fournisseur, type du terminal, version logicielle de la pile SIP,...) ;
- l'adresse de contact (AoC) de ce terminal, et
- le Call-Id formaté spécifiquement par terminal.

Les étapes E10 à E55 sont les étapes conventionnelles d'un procédé de traitement d'un message SIP REGISTER tel que mis en œuvre dans une entité S-CSCF de l'état actuel de la technique.

Elles sont donc décrites ci-après de façon succincte.

Sur réception du message d'enregistrement (étape E10), le serveur S-CSCF vérifie, au cours d'une étape E15, si l'authentification du terminal émetteur de ce message est valide ou non.

On rappelle qu'une requête d'enregistrement comporte notamment un entête SIP www-Authenticate qui permet d'identifier et d'authentifier le terminal émetteur de la requête, ce paramètre étant utilisé pour l'authentification du terminal en cœur de réseau IMS, selon le protocole HTTP Digest MD5 par exemple.

Si l'authentification échoue, parce que le contenu du champ www-Authenticate est invalide à cause de l'utilisation d'un mauvais IMPI ou password SIP, le résultat du test E15 est négatif ; ce test est alors suivi par une étape E20 au cours de laquelle le serveur S-CSCF répond au message d'enregistrement par l'envoi d'une réponse de type 403 « Forbidden ».

Si l'authentification échoue parce que la requête d'enregistrement REGISTER ne comporte pas le champ www-Authenticate ou parce que le champ Nonce n'est plus valide, le résultat du test E15 est négatif et ce test est suivi par une étape E25 au cours de laquelle le serveur S-CSCF répond à la requête d'enregistrement par l'envoi d'une réponse 401 accompagnée d'un champ Nonce. Ainsi, le terminal peut réémettre un message REGISTER contenant le champ www-Authenticate dont le contenu prend en compte la valeur du Nonce retournée dans le 401.

Lorsque l'authentification réussit, le résultat du test E15 est positif et ce test est suivi par un test E40 au cours duquel le serveur S-CSCF vérifie si l'adresse de contact AoC, correspondant à l'adresse IP et au numéro de port sur lequel le terminal peut être joint, est valide.

Si cette adresse de contact n'est pas valide, le résultat du test E40 est négatif et ce test est suivi par une étape E45 au cours de laquelle le serveur S-CSCF répond au message REGISTER par l'envoi d'une réponse 400 « Invalid Request ».

Si l'adresse de contact AoC est constituée par « * », le test E40 est suivi par une étape E50 au cours de laquelle le serveur S-CSCF répond au message REGISTER par l'envoi d'une réponse 200 OK, cette réponse étant accompagnée d'une part d'une association (« binding ») entre l'identité IMPU et l'adresse IP du terminal et son numéro de port et d'autre part une durée fournie dans le champ SIP EXPIRES correspondant à la durée d'enregistrement restante. A noter que plusieurs binding peuvent être retournés au niveau de la réponse 200 OK si plusieurs terminaux sont enregistrés avec la même IMPU.

On rappelle que la durée EXPIRES est la durée par laquelle le serveur S-CSCF définit la période que doit respecter un terminal entre deux envois successifs de requêtes REGISTER.

Si le message REGISTER comporte une adresse de contact AoC valide et non constituée par « * » le résultat du test E40 est positif et ce test est suivi par une étape E55 au cours de laquelle le serveur S-CSCF vérifie si les autres champs du message REGISTER sont valides.

Si tel n'est pas le cas le test E55 est suivi par l'étape E45 déjà décrite d'envoi de la réponse 400 « Invalid Request ».

Au cours d'une étape E60, le serveur S-CSCF vérifie si le message d'enregistrement reçu à l'étape E10 comporte ou non un champ FILE_FD comportant un paramètre discriminant au sens de l'invention.

Si tel n'est pas le cas, le résultat du test E60 est négatif, et l'invention n'est pas mise en œuvre. En variante, une file d'enregistrement par défaut peut être attribuée au terminal.

Le serveur S-CSCF utilise dans ce cas une seule file d'enregistrement pour tous les terminaux de la même identité IMPU, comme dans l'état actuel de la technique (étape E65).

Au contraire, si le message d'enregistrement reçu au cours de l'étape E10 comporte le champ FILE_FD, le serveur S-CSCF sélectionne une file en fonction de ce champ.

Conformément à la figure 1, le serveur S-CSCF choisit :
- la file d'enregistrement F1 pour les messages REGISTER émis par la passerelle domestique HGW ;
- la file d'enregistrement F2 pour les terminaux PC1, PC2 ; et
- la file d'enregistrement F3 pour le terminal mobile MT.

Chacune de ces files d'enregistrement est associée à une politique d'enregistrement respectivement POL1, POL2 , POL3.

Dans le mode de réalisation décrit ici, chaque file d'enregistrement F1, F2, F3 est également associée à une durée EXPIRES, respectivement EXP1, EXP2 et EXP3.

On rappelle que la durée EXPIRES est la durée par laquelle le serveur S-CSCF définit la période que doit respecter un terminal entre deux envois successifs de requêtes REGISTER.

Par conséquent, dans le mode de réalisation décrit ici, le procédé d'enregistrement conformément à l'invention comprend une étape E75 au cours de laquelle le serveur S-CSCF vérifie si le message REGISTER reçu en étape E10 inclut un entête SIP Expires valorisé à une valeur inférieure au paramètre EXPIRES associé à la file d'enregistrement sélectionnée.

Si tel n'est pas le cas, le résultat du test 75 est négatif et le serveur S-CSCF envoie au cours d'une étape E80, une réponse 423 « Interval too Brief » au terminal ayant émis la requête d'enregistrement reçue à l'étape E10.

Au contraire, si la valeur EXPIRES présente dans le message REGISTER reçu à l'étape E10 est supérieure ou égale à celle associée à la file sélectionnée, le résultat du test E75 est positif et ce test est suivi par une étape E85 au cours de laquelle le serveur S-CSCF vérifie si le nombre d'enregistrements autorisés pour la file sélectionnée a déjà été atteint ou non.

Si tel n'est pas le cas, le résultat du test E85 est négatif, et ce test est suivi par une étape E90 au cours de laquelle le serveur S-CSCF répond au message REGISTER par l'envoi d'un message de réponse 200OK connu de l'homme du métier, associé à la durée EXPIRES.

Le terminal émetteur du message d'enregistrement est enregistré dans le réseau IMS.

Au contraire, si le nombre d'enregistrement autorisé pour la file sélectionnée est déjà atteint, le résultat du test E85 est positif.

Ce test est alors suivi par une étape E95 au cours de laquelle le serveur S-CSCF met en œuvre la politique POL1, POL2, POL3 associée à la file F1, F2, F3 sélectionnée à l'étape E70.

Dans l'exemple de réalisation décrit ici :
- si le terminal émetteur du message d'enregistrement est la passerelle HGW, la politique POL2 est mise en œuvre (étape E105). Il s'agit dans cet exemple d'une politique consistant à enregistrer la passerelle domestique HGW émetteur de ce message, et à des-enregistrer (Etape E110) celle précédemment enregistrée (file d'attente F1 de type FIFO avec un seul enregistrement) ;
- si le terminal émetteur de message d'enregistrement est un ordinateur fixe PC1, PC2, la politique POL3 de blocage est mise en œuvre, celle-ci consiste à rejeter le terminant cherchant à s'enregistrer (Etape E115) en envoyant une réponse 403 Forbiden; et
- si le terminal émetteur de message d'enregistrement est le terminal mobile MT, la politique POL2 est mise en œuvre avec une file FIFO de quatre enregistrements maximum.

## Revendications

1. Procédé de gestion des enregistrements dans un réseau IMS, ce procédé comportant :
- une étape (E5) de création, pour une identité publique (IMPU) donnée, d'au moins deux files d'enregistrement (F1, F2, F3), chacune étant associée à une politique (POL1, POL2, POL3) d'enregistrement, au moins une desdites files étant réservée à un type particulier de terminal et associée à une politique d'enregistrement selon laquelle la file est gérée selon une méthode FIFO et comporte au plus un enregistrement;
- une étape (E10) de réception d'un message (REG) d'enregistrement émis par un terminal (MT, HGW, PC1, PC2) ayant ladite identité publique, le message comprenant un entête comportant des informations sur le type de ce terminal;
- une étape (E70) d'attribution de ladite au moins une desdites files d'enregistrement audit terminal en fonction d'une dite information sur le type du terminal comprise dans l'entête du message d'enregistrement.

2. Procédé de gestion selon la revendication 1 **caractérisé en ce que** ladite politique d'enregistrement (POL1, POL2, POL3) associée à une des autres files d'enregistrement est choisie parmi :
- une première politique (POL1) pour laquelle il n'est pas effectué de contrôle quant au nombre d'enregistrements pouvant être enregistrés dans ladite file ;
- une deuxième politique (POL2) selon laquelle la file comprend au plus un enregistrement, celle-ci étant gérée selon une méthode de type FIFO ;
- une troisième politique (POL3) consistant à rejeter toute demande d'enregistrement dans ladite file, au-delà d'un nombre limite d'enregistrements dans ladite file ;
- une quatrième politique consistant à rejeter le terminal de ladite file générant le moins de trafic sur le réseau ;
- une cinquième politique consistant à rejeter le terminal de ladite file dont le paramètre q défini dans le document RFC3261 de l'IETF est le plus petit.

3. Procédé de gestion selon la revendication 1, **caractérisé en ce que** la au moins une file réservée à un type particulier de terminal est réservée à un terminal de type passerelle domestique (HGW).

4. Procédé selon l'une quelconque des revendications 1 à 3, **caractérisé en ce que** ladite au moins une file d'enregistrement (F1, F2, F3) est associée à une valeur de durée d'enregistrement (EXP1, EXP2, EXP3) propre à ladite file.

5. Procédé selon l'une quelconque des revendications 1 à 4, **caractérisé en ce qu'**il comporte une étape de téléchargement, par ledit serveur S-CSCF, auprès d'un serveur HSS, d'un fichier de configuration d'au moins une file d'enregistrement associée à ladite identité publique (IMPU), ledit fichier de configuration comportant, pour chacune desdites files d'enregistrement :
- une taille de ladite file d'enregistrement;
- une politique d'enregistrement (POL1, POL2, POL3) associée à cette file ;
- un paramètre discriminant permettant d'attribuer ladite file d'enregistrement à un terminal et
- une valeur de durée d'enregistrement (EXP1, EXP2, EXP3) propre à ladite file.

6. Serveur S-CSCF comportant :
- des moyens (11) de création, pour une identité publique (IMPU) donnée, d'au moins deux files d'enregistrement indépendantes (F1, F2, F3), chacune étant associée à une politique (POL1, POL2, POL3) d'enregistrement, au moins une desdites files étant réservée à un type particulier de terminal et associée à une politique d'enregistrement selon laquelle la file est gérée selon une méthode FIFO et comporte au plus un enregistrement;
- des moyens (14) de réception d'un message (REG) d'enregistrement émis par un terminal (MT, HGW, PC1, PC2) ayant ladite identité publique, le message comprenant un entête comportant des informations sur le type dudit terminal;
- des moyens (11) d'attribution de ladite au moins une desdites files d'enregistrement audit terminal en fonction d'une dite information sur le type du terminal comprise dans l'entête du message d'enregistrement.

7. Programme d'ordinateur comportant des instructions pour l'exécution des étapes du procédé d'enregistrement selon l'une quelconque des revendications 1 à 5 lorsque ledit programme est exécuté par un ordinateur.

8. Support d'enregistrement (13) lisible par un ordinateur (BT) sur lequel est enregistré un programme d'ordinateur comprenant des instructions pour l'exécution des étapes du procédé d'enregistrement selon l'une quelconque des revendications 1 à 5.

9. Serveur HSS comportant un fichier de configuration d'au moins une file d'enregistrement associée à une identité publique (IMPU), ledit fichier de configuration comportant, pour chacune desdites files :
- une taille de ladite file d'enregistrement;
- une politique d'enregistrement (POL1, POL2, POL3) associée à cette file ;
- une information sur un type de terminal comprise dans un entête d'un message d'enregistrement émis par ledit terminal et permettant d'affecter la file à un type de terminal particulier ; et
- une valeur de durée d'enregistrement (EXP1, EXP2, EXP3) propre à ladite file,
au moins une desdites files étant réservée à un type particulier de terminal et associée à une politique d'enregistrement selon laquelle la file est gérée selon une méthode FIFO et comporte au plus un enregistrement.

## Patentansprüche

1. Verfahren zur Verwaltung der Anmeldungen in einem IMS-Netzwerk, wobei dieses Verfahren umfasst:
- einen Schritt (E5) der Erzeugung, für eine gegebene öffentliche Identität (IMPU), von wenigstens zwei Anmeldewarteschlangen (F1, F2, F3), die jeweils einer Anmelderichtlinie (POL1, POL2, POL3) zugeordnet sind, wobei wenigstens eine der Warteschlangen für einen bestimmten Endgerätetyp reserviert ist und einer Anmelderichtlinie zugeordnet ist, gemäß der die Warteschlange gemäß einem FIFO-Verfahren verwaltet wird und höchstens eine Anmeldung umfasst;
- einen Schritt (E10) des Empfangs einer Anmeldenachricht (REG), die von einem Endgerät (MT, HGW, PC1, PC2) gesendet wurde, das die öffentliche Identität aufweist, wobei die Nachricht einen Header umfasst, der Informationen über den Typ dieses Endgerätes enthält;
- einen Schritt (E70) der Zuordnung der wenigstens einen der Anmeldewarteschlangen zu dem Endgerät in Abhängigkeit von einer solchen Information über den Typ des Endgerätes, die im Header der Anmeldenachricht enthalten ist.

2. Verfahren zur Verwaltung nach Anspruch 1, **dadurch gekennzeichnet, dass** die Anmelderichtlinie (POL1, POL2, POL3), die einer der anderen Anmeldewarteschlangen zugeordnet wird, ausgewählt wird aus:
- einer ersten Richtlinie (POL1), für welche keine Steuerung hinsichtlich der Anzahl von Anmeldungen durchgeführt wird, die in der Warteschlange angemeldet sein können;
- einer zweiten Richtlinie (POL2), gemäß der die Warteschlange höchstens eine Anmeldung umfasst, wobei diese gemäß einem Verfahren vom Typ FIFO verwaltet wird;
- einer dritten Richtlinie (POL3), die darin besteht, jede Anmeldeanforderung in der Warteschlange zu verwerfen, durch die eine begrenzte Anzahl von Anmeldungen in der Warteschlange überschritten wird;
- einer vierten Richtlinie, die darin besteht, das Endgerät aus der Warteschlange zu verwerfen, das den wenigsten Verkehr auf dem Netzwerk erzeugt;
- einer fünften Richtlinie, die darin besteht, das Endgerät aus der Warteschlange zu verwerfen, dessen Parameter q, der im Dokument RFC3261 der IETF definiert ist, am kleinsten ist.

3. Verfahren zur Verwaltung nach Anspruch 1, **dadurch gekennzeichnet, dass** die wenigstens eine Warteschlange, die für einen bestimmten Endgerätetyp reserviert ist, für ein Endgerät vom Typ Home Gateway (HGW) reserviert ist.

4. Verfahren nach einem der Ansprüche 1 bis 3, **dadurch gekennzeichnet, dass** die wenigstens eine Anmeldewarteschlange (F1, F2, F3) einem Wert der Anmeldedauer (EXP1, EXP2, EXP3) zugeordnet ist, der für diese Warteschlange spezifisch ist.

5. Verfahren nach einem der Ansprüche 1 bis 4, **dadurch gekennzeichnet, dass** es einen Schritt des Herunterladens, durch den S-CSCF-Server von einem HSS-Server, einer Konfigurationsdatei wenigstens einer Anmeldewarteschlange, die der öffentlichen Identität (IMPU) zugeordnet ist, umfasst, wobei die Konfigurationsdatei für jede der Anmeldewarteschlangen umfasst:
- eine Größe der Anmeldewarteschlange;
- eine Anmelderichtlinie (POL1, POL2, POL3), die dieser Warteschlange zugeordnet ist;
- einen diskriminierenden Parameter, der es ermöglicht, die Anmeldewarteschlange einem Endgerät zuzuweisen, und
- einen Wert der Anmeldedauer (EXP1, EXP2, EXP3), der für die Warteschlange spezifisch ist.

6. S-CSCF-Server, welcher umfasst:
- Mittel (11) zur Erzeugung, für eine gegebene öffentliche Identität (IMPU), von wenigstens zwei unabhängigen Anmeldewarteschlangen (F1, F2, F3), die jeweils einer Anmelderichtlinie (POL1, POL2, POL3) zugeordnet sind, wobei wenigstens eine der Warteschlangen für einen bestimmten Endgerätetyp reserviert ist und einer Anmelderichtlinie zugeordnet ist, gemäß der die Warteschlange gemäß einem FIFO-Verfahren verwaltet wird und höchstens eine Anmeldung umfasst;
- Mittel (14) zum Empfang einer Anmeldenachricht (REG), die von einem Endgerät (MT, HGW, PC1, PC2) gesendet wurde, das die öffentliche Identität aufweist, wobei die Nachricht einen Header umfasst, der Informationen über den Typ dieses Endgerätes enthält;
- Mittel (11) zur Zuordnung der wenigstens einen der Anmeldewarteschlangen zu dem Endgerät in Abhängigkeit von einer solchen Information über den Typ des Endgerätes, die im Header der Anmeldenachricht enthalten ist.

7. Computerprogramm, welches Anweisungen zur Ausführung der Schritte des Anmeldeverfahrens nach einem der Ansprüche 1 bis 5, wenn das Programm von einem Computer ausgeführt wird, umfasst.

8. Aufzeichnungsmedium (13), das von einem Computer (BT) lesbar ist und auf dem ein Computerprogramm aufgezeichnet ist, das Anweisungen zur Ausführung der Schritte des Anmeldeverfahrens nach einem der Ansprüche 1 bis 5 umfasst.

9. HSS-Server, welcher eine Konfigurationsdatei wenigstens einer Anmeldewarteschlange, die der öffentlichen Identität (IMPU) zugeordnet ist, umfasst, wobei die Konfigurationsdatei für jede der Warteschlangen umfasst:
- eine Größe der Anmeldewarteschlange;
- eine Anmelderichtlinie (POL1, POL2, POL3), die dieser Warteschlange zugeordnet ist;
- eine Information über einen Endgerätetyp, die in einem Header einer von diesem Endgerät gesendeten Anmeldenachricht enthalten ist und es ermöglicht, die Warteschlange einem bestimmten Endgerätetyp zuzuweisen; und
- einen Wert der Anmeldedauer (EXP1, EXP2, EXP3), der für die Warteschlange spezifisch ist,
wobei wenigstens eine der Warteschlangen für einen bestimmten Endgerätetyp reserviert ist und einer Anmelderichtlinie zugeordnet ist, gemäß der die Warteschlange gemäß einem FIFO-Verfahren verwaltet wird und höchstens eine Anmeldung umfasst.

## Claims

1. Method for managing registrations in an IMS network, this method comprising:
- a step (E5) of creating, for a given public identity (IMPU), at least two registration queues (F1, F2, F3), each being associated with a registration policy (POL1, POL2, POL3), at least one of said queues being reserved for a particular type of terminal and associated with a registration policy in which the queue is managed using a FIFO method and contains at most one registration;
- a step (E10) of receiving a registration message (REG) sent by a terminal (MT, HGW, PC1, PC2) having said public identity, the message comprising a header containing information items on the type of this terminal;
- a step (E70) of attributing said at least one of said registration queues to said terminal depending on a said information item on the type of the terminal contained in the header of the registration message.

2. Managing method according to Claim 1, **characterized in that** said registration policy (POL1, POL2, POL3) associated with one of the other registration queues is chosen among:
- a first policy (POL1) in which the number of registrations able to be held in said queue is not subject to control;
- a second policy (POL2) in which the queue comprises at most one registration, the latter being managed using a FIFO type method;
- a third policy (POL3) consisting in rejecting any request to add a registration to said queue, beyond a limiting number of registrations in said queue;
- a fourth policy consisting in rejecting the terminal of said queue generating the least traffic on the network;
- a fifth policy consisting in rejecting the terminal of said queue the parameter q, as defined in document RFC3261 of the IETF, of which is the lowest.

3. Managing method according to Claim 1, **characterized in that** the at least one queue reserved for a particular type of terminal is reserved for a home gateway (HGW).

4. Method according to any one of Claims 1 to 3, **characterized in that** said at least one registration queue (F1, F2, F3) is associated with a registration duration value (EXP1, EXP2, EXP3) specific to said queue.

5. Method according to any one of Claims 1 to 4, **characterized in that** it comprises a step in which said S-CSCF server downloads from an HSS server a configuration file for configuring at least one registration queue associated with said public identity (IMPU), said configuration file containing, for each of said registration queues:
- a size of said registration queue;
- a registration policy (POL1, POL2, POL3) associated with this queue;
- a discriminating parameter allowing said registration queue to be attributed to a terminal; and
- a registration duration value (EXP1, EXP2, EXP3) specific to said queue.

6. S-CSCF server, comprising:
- means (11) for creating, for a given public identity (IMPU), at least two independent registration queues (F1, F2, F3), each being associated with a registration policy (POL1, POL2, POL3), at least one of said queues being reserved for a particular type of terminal and associated with a registration policy in which the queue is managed according to a FIFO method and contains at most one registration;
- means (14) for receiving a registration message (REG) sent by a terminal (MT, HGW, PC1, PC2) having said public identity, the message comprising a header containing information items on the type of said terminal;
- means (11) for attributing said at least one of said registration queues to said terminal depending on a said information item on the type of the terminal contained in the header of the registration message.

7. Computer program containing instructions for executing the steps of the registering method according to any one of Claims 1 to 5 when said program is executed by a computer.

8. Storage medium (13) readable by a computer (BT) on which is stored a computer program containing instructions for the execution of the steps of the registering method according to any one of Claims 1 to 5.

9. HSS server comprising a configuration file for configuring at least one registration queue associated with a public identity (IMPU), said configuration file containing, for each of said queues:
- a size of said registration queue;
- a registration policy (POL1, POL2, POL3) associated with this queue;
- an information item on a type of terminal, said information item being contained in a header of a registration message sent by said terminal and allowing the queue to be assigned to one particular type of terminal; and
- a registration duration value (EXP1, EXP2, EXP3) specific to said queue,
at least one of said queues being reserved for a particular type of terminal and associated with a registration policy in which the queue is managed using a FIFO method and contains at most one registration.
